# EUROPEAN PATENT SPECIFICATION

(11) **EP 2 929 733 B1**
(45) Date of publication and mention of the grant of the patent: **28.03.2018**
(21) Application number: 13801959.1
(22) Date of filing: 25.11.2013
(51) Int. Cl.: H04W 52/02

(54) **METHODS AND DEVICES FOR REGULATING POWER IN WIRELESS RECEIVER CIRCUITS**
VERFAHREN UND VORRICHTUNGEN ZUR REGULIERUNG DER LEISTUNG BEI DRAHTLOSEN EMPFÄNGERSCHALTUNGEN
PROCÉDÉS ET DISPOSITIFS POUR LA RÉGULATION DE PUISSANCE DANS DES CIRCUITS DE RÉCEPTEUR SANS FIL

(30) Priority: 06.12.2012 US 201213707230
(43) Date of publication of application: 14.10.2015
(73) Proprietor: Qualcomm Incorporated, San Diego, CA 92121-1714 (US)
(72) Inventor: MOHAMMED, Galib Asadullah Mohiuddin, San Diego, California 92121-1714 (US); ATTAR, Rashid Ahmed Akbar, San Diego, California 92121-1714 (US); GEORGE, Brian Michael, San Diego, California 92121-1714 (US); DABBAGH, Ameer, San Diego, California 92121-1714 (US)
(74) Representative: Tomkins & Co
(86) International application number: PCT/US2013/071611
(87) International publication number: WO 2014/088860

(56) References cited:
- WO-A1-2012/104749
- US-A1- 2012 120 858
- US-B1- 7 155 263

## Description

### TECHNICAL FIELD

Embodiments of the present invention discussed below relate generally to wireless communication, and more specifically to a wireless communications access terminal and method for enabling power conservation in wireless communications access terminals.

### BACKGROUND

Wireless communications systems are widely deployed to provide various types of communication content such as voice, video, packet data, messaging, broadcast, and so on. These systems may be accessed by various types of devices adapted to facilitate wireless communications, where multiple devices share the available system resources (e.g., time, frequency, and power). Examples of such wireless communications systems include code-division multiple access (CDMA) systems, time-division multiple access (TDMA) systems, frequency-division multiple access (FDMA) systems and orthogonal frequency-division multiple access (OFDM A) systems.

Access terminals adapted to access one or more wireless communications systems are becoming increasingly popular, with consumers often using power-intensive applications that run on the access terminals. Access terminals are typically battery-powered and the amount of power a battery can provide between charges is generally limited. As a result, providing power efficient devices is desirable. WO 2012/104749 discloses intermittent shut-down of rf circuitry in wireless communication terminals.US 2012/120858 discloses a data resume indicator for mobile device power conservation.US 7155263 discloses battery-conserving transmission and encoding method for wireless ad hoc networks.

### BRIEF SUMMARY OF SOME EXAMPLES

The following presents a simplified summary of one or more aspects of the present disclosure to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.

In some instances, features which may assist in extending the operating life of access terminals between recharging the battery can be beneficial. Various features and aspects of the present disclosure are adapted to facilitate power conservation by regulating power of one or more components in a wireless receiver circuit. According to at least one aspect of the disclosure, a wireless communications access terminal is defined in independent claim 1.

Further aspects provide a method operational for a wireless communications terminal as defined in independent claim 5.

Still further aspects include computer-readable storage medium as defined in independent claim 10.

Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments, it should be understood that such exemplary embodiments can be implemented in various devices, systems, and methods.

### DRAWINGS

FIG. 1 is a block diagram illustrating at least one example of a network environment in which one or more aspects of the present disclosure may find application.
FIG. 2 is a block diagram illustrating select components of an access terminal according to at least one example.
FIG. 3 is a block diagram illustrating select components of the receiver circuit and the processing circuit of FIG. 2 according to some embodiments.
FIG. 4 is a block diagram of a slot format illustrating how data, pilot, and control (MAC) channels are time multiplexed in at least one example of an EVDO communication system.
FIG. 5 is a block diagram illustrating the state of a low noise amplifier (LNA) between active and passive states in relationship to an EVDO slot according to some embodiments.
FIG. 6 is a flow diagram illustrating a method operational on an access terminal according to at least one implementation.
FIG. 7 is a flow diagram illustrating at least one example of a process associated with the determining step in FIG. 6 according to some embodiments.
FIG. 8 is a flow diagram illustrating at least one other example of a process associated with the determining step in FIG. 6 according to some embodiments.

### DETAILED DESCRIPTION

The description set forth below in connection with the appended drawings is intended as a description of various configurations and is not intended to represent the only configurations in which the concepts and features described herein may be practiced. The following description includes specific details for the purpose of providing a thorough understanding of various concepts. However, it will be apparent to those skilled in the art that these concepts may be practiced without these specific details. In some instances, well known circuits, structures, techniques and components are shown in block diagram form to avoid obscuring the described concepts and features.

The various concepts presented throughout this disclosure may be implemented across a broad variety of telecommunication systems, network architectures, and communication standards. Certain aspects of the discussions are described below for 3rd Generation Partnership Project 2 (3GPP2) EVDO protocols and systems, and related terminology may be found in much of the following description. However, those of ordinary skill in the art will recognize that one or more aspects of the present disclosure may be employed and included in one or more other wireless communication protocols and systems.

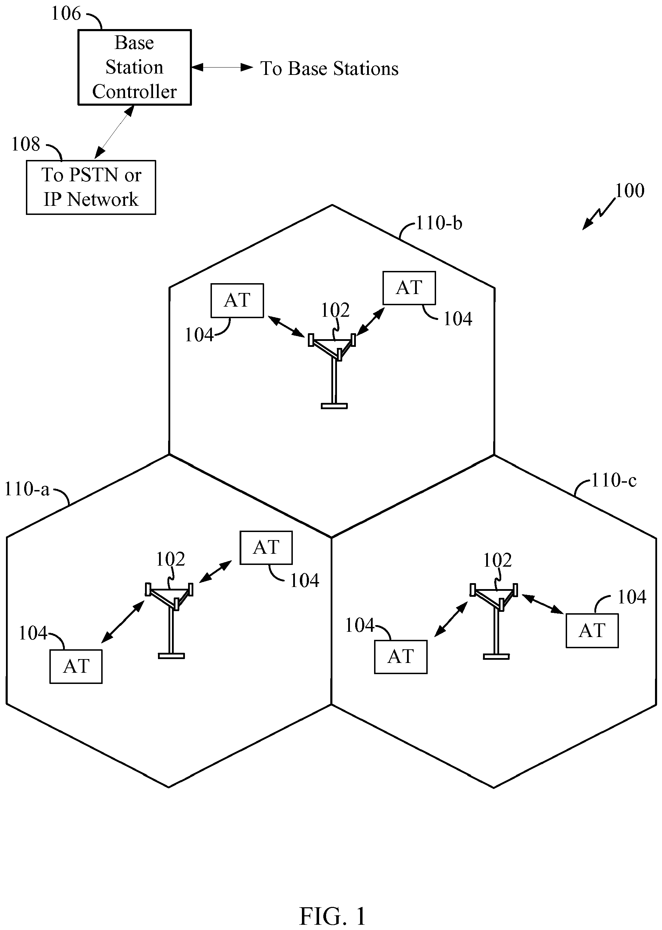

According to at least one aspect of the present disclosure, communications devices are provided, with reference to the appended claims, that are adapted to facilitate power savings by regulating power to one or more components. FIG. 1 is a block diagram of a network environment in which one or more aspects of the present disclosure may find application. The wireless communication system 100 is adapted to facilitate wireless communication between a plurality of wireless communication devices, including base stations 102 and access terminals 104. The wireless communication system 100 can further include one or more base station controllers (BSC) 106, and a core network 108 providing access to a public switched telephone network (PSTN) (e.g., via a mobile switching center/visitor location register (MSC/VLR)) and/or to an IP network (e.g., via a packet data switching node (PDSN)).

The wireless communication devices (e.g., the base stations 102 and access terminals 104) may be adapted to interact with one another through wireless signals. In some instances, such wireless interaction modulated signals transmitted on one or more carriers. Each modulated signal may be a CDMA signal, a TDM A signal, an OFDMA signal, a Single Carrier Frequency Division Multiple Access (SC-FDMA) signal, etc. Each modulated signal may carry control information (e.g., pilot signals), overhead information, data, etc.

The base stations 102 can wirelessly communicate with the access terminals 104 via a base station antenna. The base stations 102 may each be implemented generally as a device adapted to facilitate wireless connectivity (for one or more access terminals 104) to the wireless communications system 100. The base stations 102 may also be referred to by those of ordinary skill in the art as access points, base transceiver stations (BTS), radio base stations, radio transceivers, transceiver functions, basic service sets (BSS), extended service sets (ESS), Node Bs, femto cells, pico cells, and/or some other suitable terminology.

The base stations 102 are configured to communicate with the access terminals 104 under the control of the base station controller 106. Each of the base stations 102 can provide communication coverage for a respective geographic area. The coverage area 110 for each base station 102 here is identified as cells 110-a, 110-b, or 110-c. The coverage area 110 for a base station 102 may be divided into sectors (not shown, but making up only a portion of the coverage area). The system 100 may include base stations 102 of different types (e.g., macro, micro, and/or pico base stations).

The access terminals 104 may be dispersed throughout the coverage areas 110, and may wirelessly communicate with one or more sectors associated with each respective base station 102. An access terminal 104 may also be referred to by those skilled in the art as a user equipment (UE), a mobile station (MS), a subscriber station, a mobile unit, a subscriber unit, a wireless unit, a remote unit, a mobile device, a wireless device, a wireless communications device, a remote device, a mobile subscriber station, a mobile terminal, a wireless terminal, a remote terminal, a handset, a terminal, an entertainment device, a television, a computer/computing device, a user agent, a mobile client, a client, or some other suitable terminology. Examples of an access terminal 104 include a mobile phone, a pager, a wireless modem, a personal digital assistant, a personal information manager (PIM), a personal media player, a palmtop computer, a laptop computer, a tablet computer, a television, an appliance, an e-reader, a digital video recorder (DVR), a machine-to-machine (M2M) enabled device, and/or other communication/computing device which communicates, at least partially, through a wireless or cellular network.

The access terminals 104 may employ various operating states while operating within the wireless communication system 100. For example, an access terminal 104 can be capable of operating in a connected (or active) state or a dormant (or idle) state according to its current activity within the system. The connected (or active) state can include a state where a physical traffic channel is actively employed between an access terminal 104 and a base station 102. In the connected state, the access terminal 104 and the base station 102 may send data to any other device. The dormant (or idle) state refers to a state where there is no active physical traffic channel setup between a access terminal 104 and the base station 102. In some scenarios while in idle state, a PPP link between an access terminal 104 and a packet data switching node (PDSN) at the core network 108 may be maintained. Also in some scenarios, while in a dormant state, an access terminal 104 may operate in a conventional discontinuous reception (DRX) mode to conserve power.

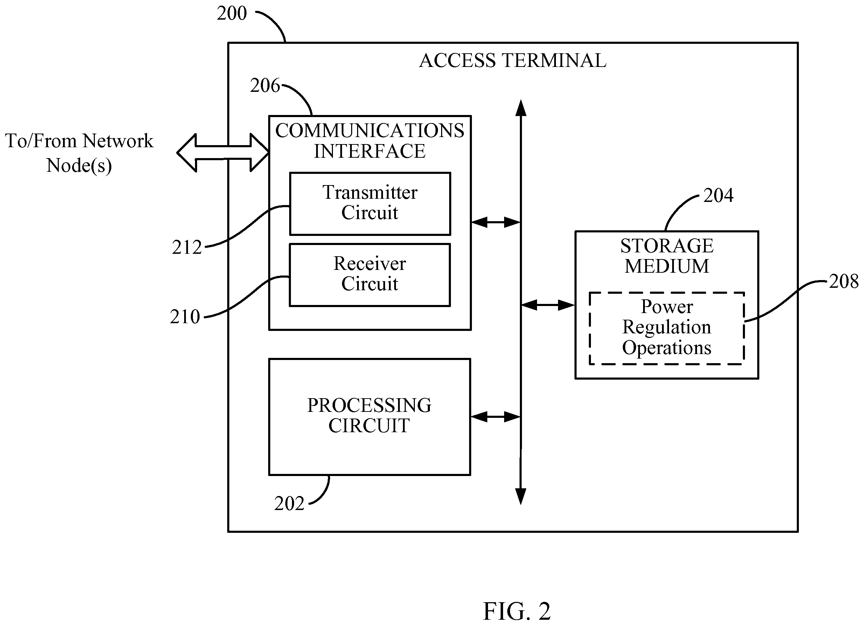

According to at least one aspect of the present disclosure, access terminals 104 can be configured for regulating power to one or more components when no data is expected to be received for a period of time while operating in the connected (or active) state. Turning to FIG. 2, a block diagram is shown illustrating select components of an access terminal 200 according to at least one example. As shown, the access terminal 200 generally includes a processing circuit 202 coupled to or placed in electrical communication with a storage medium 204 and a communications interface 206.

The processing circuit 202 is arranged to obtain, process and/or send data, control data access and storage, issue commands, and control other desired operations. The processing circuit 202 may include circuitry adapted to implement desired programming provided by appropriate media in at least one example. For example, the processing circuit 202 may be implemented as one or more processors, one or more controllers, and/or other structure configured to execute executable programming. Examples of the processing circuit 202 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 202 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 202 are for illustration and other suitable configurations within the scope of the present disclosure are also contemplated.

The processing circuit 202 is adapted for processing, including the execution of programming, which may be stored on the storage medium 204. As used herein, the term "programming" shall be construed broadly to include without limitation instructions, instruction sets, data, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The storage medium 204 may represent one or more computer-readable, machine-readable, and/or processor-readable devices for storing programming, such as processor executable code or instructions (e.g., software, firmware), electronic data, databases, or other digital information. The storage medium 204 may also be used for storing data that is manipulated by the processing circuit 202 when executing programming. The storage medium 204 may be any available media that can be accessed by a general purpose or special purpose processor, including portable or fixed storage devices, optical storage devices, and various other mediums capable of storing, containing and/or carrying programming. By way of example and not limitation, the storage medium 204 may include a computer-readable, machine-readable, and/or processor-readable storage medium such as a magnetic storage device (e.g., hard disk, floppy disk, magnetic strip), an optical storage medium (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and/or other mediums for storing programming, as well as any combination thereof.

The storage medium 204 may be coupled to the processing circuit 202 such that the processing circuit 202 can read information from, and write information to, the storage medium 204. That is, the storage medium 204 can be coupled to the processing circuit 202 so that the storage medium 204 is at least accessible by the processing circuit 202, including examples where the storage medium 204 is integral to the processing circuit 202 and/or examples where the storage medium 204 is separate from the processing circuit 202 (e.g., resident in the access terminal 200, external to the access terminal 200, and/or distributed across multiple entities).

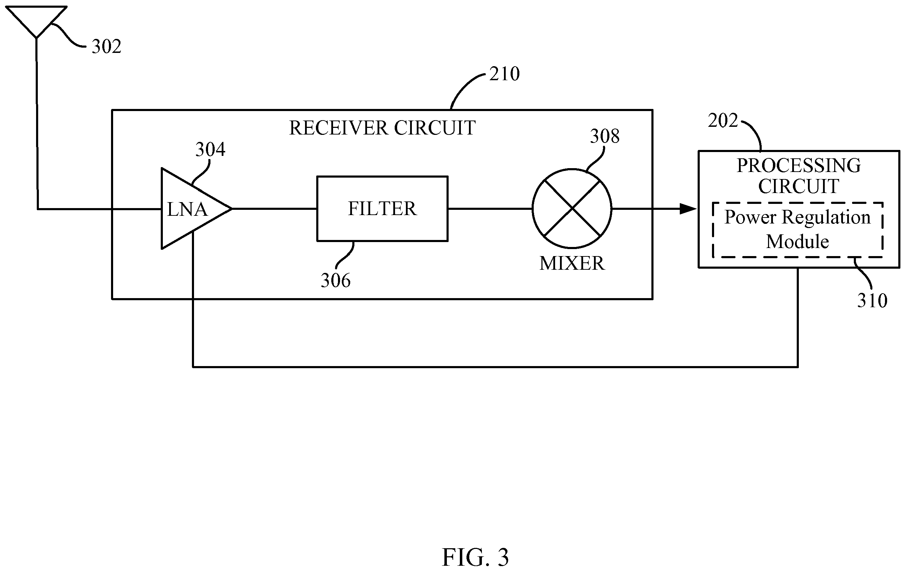

Programming stored by the storage medium 204, when executed by the processing circuit 202, causes the processing circuit 202 to perform one or more of the various functions and/or process steps described herein. For example, the storage medium 204 may include power regulation operations 208. The power regulation operations 208 can be implemented by the processing circuit 202 (e.g., the power regulation module 310 in FIG. 3) to regulate the power to one or more components of the receiver circuit 210. Thus, according to one or more aspects of the present disclosure, the processing circuit 202 is adapted to perform (in conjunction with the storage medium 204) any or all of the processes, functions, steps and/or routines for any or all of the access terminals described herein (e.g., access terminal 104 and/or 200). As used herein, the term "adapted" in relation to the processing circuit 202 may refer to the processing circuit 202 being one or more of configured, employed, implemented, and/or programmed to perform a particular process, function, step and/or routine according to various features described herein.

The communications interface 206 can configured to facilitate wireless communications of the access terminal 200. For example, the communications interface 206 can include circuitry and/or programming adapted to facilitate the communication of information bi-directionally to one or more network entities. As shown, the communications interface 206 includes wireless transceiver circuitry, including at least one receiver circuit 210 (e.g., one or more receiver chains) and/or at least one transmitter circuit 212 (e.g., one or more transmitter chains). FIG. 3 is a block diagram illustrating select components of the receiver circuit 210 and the processing circuit 202. As illustrated, the receiver circuit 210 can be coupled with one or more antennas 302. In the depicted example, the one or more antennas 302 can be coupled with a low noise amplifier (LNA) 304 of the receiver circuit 210. The receiver circuit 210 may further include one or more filters 306, as well as one or more mixers 308 positioned downstream from the low noise amplifier (LNA) 304.

The receiver circuit 210 can be coupled with the processing circuit 202 such that an output from the receiver circuit 210 may be conveyed to the processing circuit 202. Received signals can be processed according to conventional processing or as otherwise desired. According to at least one aspect, the processing circuit 202 can also be coupled with the low noise amplifier (LNA) 304 in a manner to regulate the power to the low noise amplifier (LNA) 304. By way of example and not limitation, the processing circuit 202 can be coupled with the low noise amplifier (LNA) 304 in a manner similar to an automatic gain control (AGC) configuration. In some instances, although not depicted in FIG. 3, the processing circuit 202 may be similarly coupled to the one or more filters 306 and to the one or more mixers 308, to control the power to these components. The processing circuit 202 may include a power regulation module 310, including circuitry and/or programming (e.g., the power regulation operations 208 in FIG. 2) adapted to regulate power to the low noise amplifier (LNA) 304, the one or more filters 306 and/or the one or more mixers 308.

When the access terminal 200 operates in a connected (or active) state, the access terminal 200 can wirelessly receive and transmit binary bits organized into packets communicated over an air interface. Wireless communications received by the access terminal 200 from a network entity such as a base station (e.g., a base station 102 in FIG. 1) are referred to as forward link (or downlink) communications. Wireless communications sent from the access terminal 200 to a network entity such as a base station are referred to as reverse link (or uplink) communications. When a packet is received by the access terminal 200, the wireless signal is first received at the antenna 302. The received packet is conveyed to the low noise amplifier (LNA) 304 where the signal is amplified. The amplified signal may be conveyed to one or more filters 306, mixers 308 and/or other components for additional conditioning before being conveyed to the processing circuit 202 for further signal and/or packet processing.

When a conventional access terminal operates in connected (or active) mode, the access terminal's low noise amplifier (LNA) is typically powered on the entire time. The low noise amplifier (LNA), as well as the other receiver components (e.g., filters and mixers), consume a significant amount of power when powered ON. According to at least one aspect of the present disclosure, the access terminal 200 in FIG. 2 is adapted to power down at least the low noise amplifier (LNA) 304 shown in FIG. 3 during periods when data is not received by the access terminal 200 while operating in the connected (or active) mode. Other components can also be powered down also as desired.

The regulation of power to the low noise amplifier 304 (and other components of the receiver circuit 210) can be based on a determination that data is not expected to be received by the access terminal 200 for a period of time while remaining in the connected (or active) state. For instance, the access terminal 200 may determine whether an indicator is received during a particular slot, where the indicator is adapted to signify whether data is expected to be received during the particular slot. By way of example and not limitation, this indicator may include a portion of a transmission commonly referred to as the preamble in Evolution-Data Optimized (EVDO) standards, or a message commonly referred to as a downlink control information (DCI) message in Long Term Evolution (LTE) standards. Detection of such an indicator (e.g., preamble, DCI message) signifies to the access terminal 200 that data is expected to be received during a particular slot or subframe.

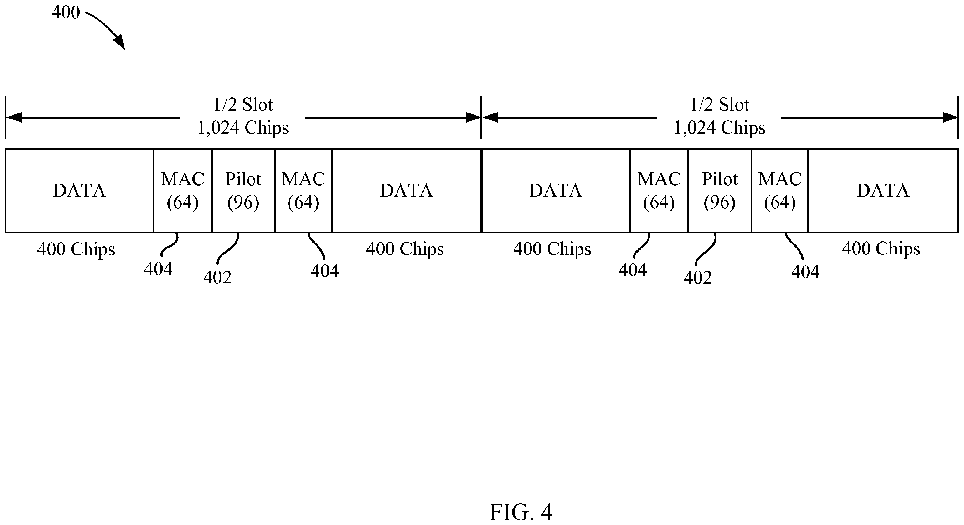

Referring to FIG. 4, a more detailed example will be provided for an Evolution-Data Optimized (EVDO) example. Typically, a forward link EVDO communication can be broken into slots of a fixed duration. A set of sixteen (16) slots makes up a group referred to as a frame. FIG. 4 is a block diagram of a slot format illustrating how data, pilot, and control (MAC) channels are time multiplexed in at least one example of an EVDO communication. The slot 400 generally includes 2048 chips. A pilot burst 402 is transmitted twice per slot for ninety-six (96) chips each time. Each pilot burst 402 is guarded by two Medium Access Control (MAC) bursts 404 of sixty-four (64) chips. The pilot burst 402 is typically employed by the processing circuit 202 (e.g., the power regulation module 310) to adjust the gain of the low noise amplifier (LNA) 304 shown in FIG. 3 by conventional procedures often referred to as automatic gain control (ACG).

Each slot 400 may be assigned to a specific access terminal, and may accordingly be addressed to each respective access terminal. This addressing is achieved by employing a preamble which includes an uncoded MAC index. Each EVDO packet can include a preamble occupying an initial amount of chips of the data burst, while the remaining chips of the slot carry the packet data. The length of the preamble typically varies according to the data rate.

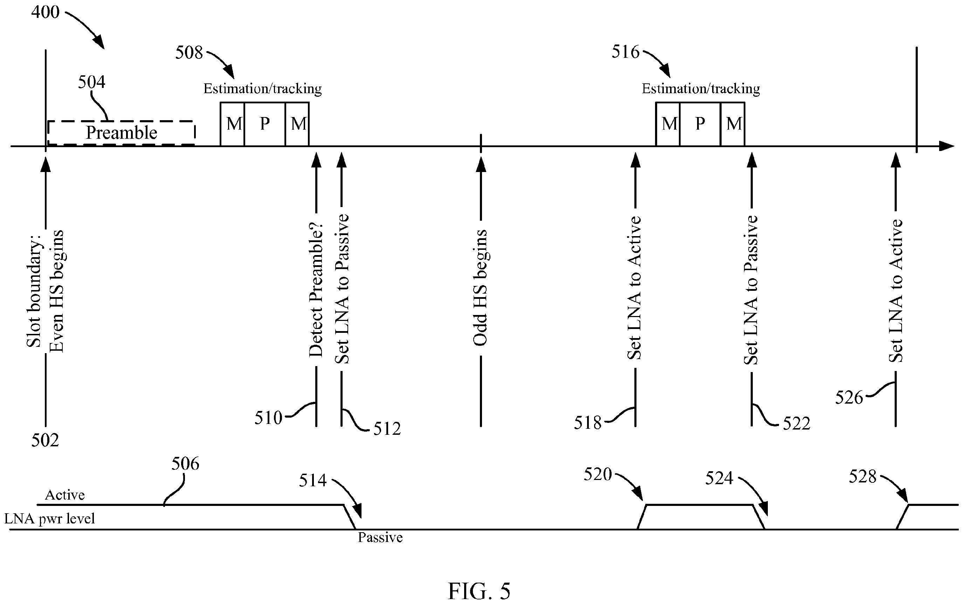

According to at least one example, the access terminal 200 (e.g., the power regulation operations 212) may be adapted to monitor a slot for an indicator (e.g., preamble, DCI message), and to power down the low noise amplifier (LNA) 304 when an indicator is detected (e.g., when no preamble is detected, or when a DCI message indicates the access terminal is not scheduled for reception during the following subframes). For example, FIG. 5 is a block diagram illustrating the state of the low noise amplifier (LNA) 304 between active and passive states in relationship to the EVDO slot 400. Referring to FIGS. 3 and 5, at the beginning of the slot 400 (e.g., at the slot boundary 502) the low noise amplifier (LNA) 304 and other components of the receiver circuit 210 are in an active state (e.g., powered ON).

With the low noise amplifier (LNA) 304 and other components of the receiver circuit 210 powered ON, the processing circuit 202 (e.g., the power regulation module 310) can determine whether a preamble 504 is received for the slot 400. For example, the processing circuit 202 (e.g., the power regulation module 310) can detect for a preamble 504 during a length of time when a preamble 504 would be present if received. During this detection period, the low noise amplifier (LNA) 304 and other components of the receiver circuit 210 remain in the active state (e.g., powered ON), as indicated on the LNA power level diagram at 506. If a preamble 504 is detected, the low noise amplifier (LNA) 304 and other components of the receiver circuit 210 can remain in the active state (e.g., powered ON) for the rest of the slot 400 (e.g., during the even half slot (HS) and the odd half slot). In this example, it is assumed that there is no preamble 504, and no preamble is detected during the period of time when the preamble 504 would typically be present for a given data rate. In this example, the estimation and tracking procedures 508 (e.g., the pilot burst 402 and the two MAC bursts 404 in FIG. 4) may occur near the end of the period of time when the preamble 504 would be present. The processing circuit 202 (e.g., the power regulation module 310) may accordingly keep the low noise amplifier (LNA) 304 and other components of the receiver circuit 210 in the active state (e.g., powered ON) 506.

At some point in time following the period of time when the preamble 504 would be present, the processing circuit 202 (e.g., the power regulation module 310) can determine 510 whether a preamble was detected. As illustrated in the present example, this determination may follow the estimation and tracking procedures 508. In response to determining at 510 that no preamble was detected, the processing circuit 202 (e.g., the power regulation module 310) can save the current power settings for the low noise amplifier (LNA) 304 (e.g., the current gain state) and can set the low noise amplifier (LNA) 304 and other components of the receiver circuit 210 to the passive state (e.g., powered down, placed in reduced powered state from full/normal power operation, or OFF) at 512, and as illustrated by the LNA power level diagram at 514.

During the odd half slot (HS) of the slot 400, subsequent estimation and tracking procedures 516 are scheduled. Accordingly, the processing circuit 202 (e.g., the power regulation module 310) can return the low noise amplifier (LNA) 304 and other components of the receiver circuit 210 to the active state (e.g., powered ON), as illustrated at 518 and at 520 of the LNA power level diagram. For instance, the processing circuit 202 (e.g., the power regulation module 310) can restore the low noise amplifier (LNA) 304 (and any other components of the receiver circuit 210) to the power settings employed before being switched to the passive state.

When the low noise amplifier (LNA) 304 is changed from the passive state (e.g., powered down or OFF) to the active state (e.g., powered ON), the associated gain changes to the low noise amplifier (LNA) 304 can create phase jumps, and a direct current component in the receiver circuit 210 may take some time for acquisition before useful samples are collected by the processing circuit 202. To provide sufficient time for the low noise amplifier (LNA) 304 to settle, and to compensate for propagation delay, some examples of the present disclosure may employ an optional calibration period. In a calibration period, the low noise amplifier (LNA) 304 and other components of the receiver circuit 210 can be set to the active state (e.g., powered ON) for a predetermined period of time prior to the expected sample collection for an expected transmission (e.g., expected estimation and tracking communications, beginning of a subsequent slot). Powering on such components before data reception enables data communication to occur without interruption.

In some examples, compensation for these effects in the receiver circuit 210 resulting from changing the low noise amplifier (LNA) 304 from the passive state to the active state can be made by the processing circuit 202 without a significant delay period. For instance, previously obtained values for the phase jump and/or changes in the direct current component can be employed by the processing circuit 202 to compensate for (e.g., ignore, filter out) the phase jump and/or direct current component change when the low noise amplifier (LNA) 304 is switched from the passive state to the active state.

With the low noise amplifier (LNA) 304 and other components of the receiver circuit 210 in the active state (e.g., powered ON), the access terminal 200 can obtain and process the estimation and tracking communications. Following the estimation and tracking procedures 516, the processing circuit 202 (e.g., the power regulation module 310) changes the low noise amplifier (LNA) 304 and other components of the receiver circuit 210 back to the passive state at 522, and as illustrated at 524 of the LNA power level diagram. At or near the end of the slot 400, the wireless device can return the low noise amplifier (LNA) 304 and other components of the receiver circuit 210 to the active state (e.g., powered ON) at 526, and as illustrated at 528 of the LNA power level diagram to detect for a preamble in the next slot. Thus, for the subsequent slot, the processing circuit 202 can perform similar steps as described above.

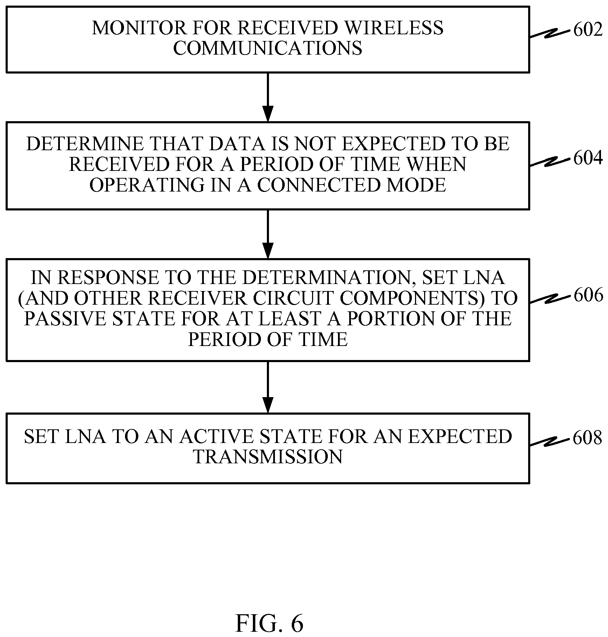

Additional aspects of the present disclosure include methods operational on an access terminal. FIG. 6 is a flow diagram illustrating a method operational on an access terminal, such as access terminal 200, according to at least one example. Referring to FIGS. 2, 3, and 6, the access terminal 200 may monitor for received wireless communications at step 602. For example, the processing circuit 202 (e.g., the power regulation module 310) executing the power regulation operations 208 may monitor the receiver circuit 210 for any received wireless communications.

At step 604, the access terminal 200 can determine that data is not expected to be received for a period of time while the access terminal 200 is operating in a connected mode. For instance, the processing circuit 202 (e.g., the power regulation module 310) executing the power regulation operations 208 may detect an indicator signifying that data is not expected to be received for the period of time.

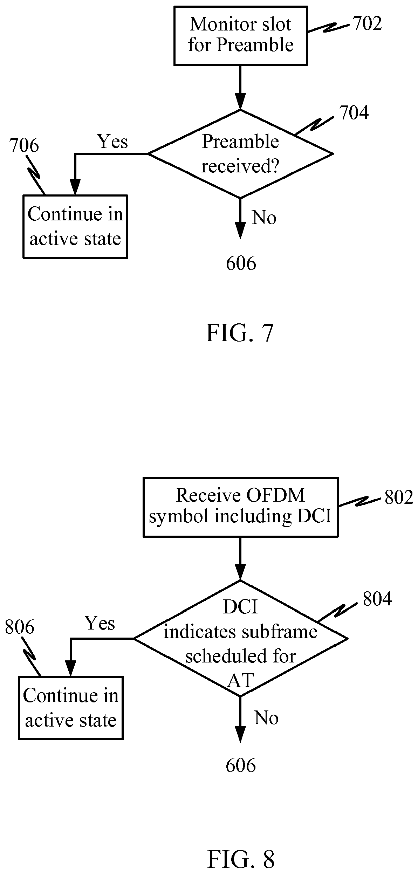

In at least one example, the indicator may include a detection or determination informing the processing circuit 202 (e.g., the power regulation module 310) that a preamble is not received during a reception slot. For instance, the power regulation operations 208 may be adapted to cause the processing circuit 202 (e.g., the power regulation module 310) to perform the steps illustrated by the flow diagram of FIG. 7. That is, the power regulation operations 208 may be adapted to cause the processing circuit 202 (e.g., the power regulation module 310) to monitor a slot for a preamble at step 702. At step 704, a determination is made whether a preamble has been received in the current slot. If a preamble is not received, the power regulation operations 208 may cause the processing circuit 202 (e.g., the power regulation module 310) to continue to step 606 in FIG. 6. If, on the other hand, a preamble is received, the power regulation operations 208 may cause the processing circuit 202 (e.g., the power regulation module 310) to continue under conventional power schemes (e.g., retain the low noise amplifier (LNA) 304 in an active state) for receiving the data at step 706.

In at least one other example, the indicator may include a received downlink control information (DCI) message including an indication that data is not expected to be received for the period of time (e.g., that no subsequent subframe is scheduled for the access terminal 200). For example, the power regulation operations 208 may be adapted to cause the processing circuit 202 (e.g., the power regulation module 310) to perform the steps illustrated by the flow diagram of FIG. 8. That is, the power regulation operations 208 may be adapted to cause the processing circuit 202 (e.g., the power regulation module 310) to receive, via the communications interface 206, one or more OFDM symbols including one or more DCI messages, at step 802. At step 804, a determination is made whether a received DCI message indicates that the access terminal 200 is scheduled to receive data in a subsequent subframe. If a subframe is not scheduled for the access terminal 200, the power regulation operations 208 may cause the processing circuit 202 (e.g., the power regulation module 310) to continue to step 606 in FIG. 6. If, on the other hand, a subframe is scheduled for the access terminal 200, the power regulation operations 208 may cause the processing circuit 202 (e.g., the power regulation module 310) to continue under conventional power schemes for receiving the communication (e.g., retain the low noise amplifier (LNA) 304 in an active state) at step 806.

Returning again to FIGS. 2, 3, and 6, the access terminal 200 can set the low noise amplifier (LNA) 304 to a passive state for at least a portion of the period of time, when it is determined at step 604 that data is not expected to be received for the period of time. For example, the processing circuit 202 (e.g., the power regulation module 310) executing the power regulation operations 208 may, in response to the determination at step 604, power down the low noise amplifier (LNA) 304 for at least a portion of the period of time. That is, the processing circuit 202 (e.g., the power regulation module 310) may employ a power regulator to reduce or even switch OFF power to the low noise amplifier (LNA) 304. In some instances, the processing circuit 202 (e.g., the power regulation module 310) executing the power regulation operations 208 may also set one or more other components of the receiver circuit 210 (e.g., one or more filters 306, one or more mixers 308) to the passive state. In some implementations, the processing circuit 202 (e.g., the power regulation module 310) executing the power regulation operations 208 may store one or more parameters associated with the low noise amplifier (LNA) 304 (e.g., gain settings) in the active state prior to setting the low noise amplifier (LNA) 304 to the passive state. Such parameters can be stored in the storage medium 204.

At some point after the low noise amplifier (LNA) 304 is set to the passive state, the access terminal 200 may expect one or more transmissions. For example, scheduled estimation and tracking transmissions may be expected, a new slot may be expected, and/or some other communication may be expected. As a result, the access terminal 200 may set the low noise amplifier (LNA) 304 to the active state for the expected transmission at step 608. For example, the processing circuit 202 (e.g., the power regulation module 310) executing the power regulation operations 208 may power up the low noise amplifier (LNA) 304.

In at least some instances, the processing circuit 202 (e.g., the power regulation module 310) executing the power regulation operations 208 may set the low noise amplifier (LNA) 304 to the active state at a predetermined period of time before the expected transmission. This predetermined period of time (e.g., a predefined calibration period) can be selected so that it is sufficient to enable the low noise amplifier (LNA) 304 to settle, so the processing circuit 202 (e.g., the power regulation module 310) can compensate for a phase jump, a direct current component, a propagation delay, and/or other issues resulting from changing the low noise amplifier (LNA) 304 from the passive state to the active state.

In one or more instances, the processing circuit 202 (e.g., the power regulation module 310) executing the power regulation operations 208 may overcome the effects in the receiver circuit 210 resulting from changing the low noise amplifier (LNA) 304 from the passive state to the active state without a significant delay period. For example, the processing circuit 202 (e.g., the power regulation module 310) executing the power regulation operations 208 may obtain values for phase jump, changes in the direct current, and/or other effects that may occur during one or more previous switches in the low noise amplifier (LNA) 304 from the passive state to the active state. The one or more values may be stored in the storage medium 204. Employing the previously obtained value(s), the processing circuit 202 (e.g., the power regulation module 310) executing the power regulation operations 208 may compensate for the effects (e.g., ignore, filter out) of changing the low noise amplifier (LNA) 304 from the passive state to the active state.

By employing one or more of the features or aspects of the present disclosure, access terminals may reduce power consumption. Such reductions in power consumption may extend the operating life of such access terminals.

While the above discussed aspects, arrangements, and embodiments are discussed with specific details and particularity, one or more of the components, steps, features and/or functions illustrated in FIGS. 1, 2, 3, 4, 5, 6, 7 and/or 8 may be rearranged and/or combined into a single component, step, feature or function or embodied in several components, steps, or functions. Additional elements, components, steps, and/or functions may also be added or not utilized without departing from the invention. The apparatus, devices and/or components illustrated in FIGS. 1, 2 and/or 3 may be configured to perform or employ one or more of the methods, features, parameters, or steps described in FIGS. 4, 5, 6, 7 and/or 8. The novel algorithms described herein may also be efficiently implemented in software and/or embedded in hardware.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function. The various methods described herein may be partially or fully implemented by programming (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the embodiments disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

The various features associate with the examples described herein and shown in the accompanying drawings can be implemented in different examples and implementations without departing from the scope of the present disclosure. Therefore, although certain specific constructions and arrangements have been described and shown in the accompanying drawings, such embodiments are merely illustrative and not restrictive of the scope of the disclosure, since various other additions and modifications to, and deletions from, the described embodiments will be apparent to one of ordinary skill in the art. Thus, the scope of the disclosure is only determined by the literal language, and legal equivalents, of the claims which follow.

## Claims

1. A wireless communications access terminal (200), comprising:
a communications interface (206) including a receiver circuit (210) configured to receive wireless communication signals from a base station (102) of a wireless network (100);
a storage medium (204); and
a processing circuit (202) coupled to the communications interface and the storage medium, the processing circuit **characterised in that** it is adapted to:
analyse received wireless communication signals to determine that a preamble is not received during a slot when operating in a connected mode in which a physical traffic channel is actively employed between the wireless communications access terminal and the base station, wherein said preamble indicates that data is expected to be present in future signals for a period of time; and
power down a low noise amplifier, LNA (304), of the receiver circuit for at least a portion of the slot in response to the determination.

2. The access terminal of claim 1, wherein the processing circuit (202) is further adapted to: power down one or more other receiver circuit (210) components for at least a portion of the slot in response to the determination, the one or more receiver circuit (210) components selected from a one or more receiver circuit components comprising at least one filter and at least one mixer.

3. The access terminal of claim 1, wherein the processing circuit (202) is further adapted to: power up the low noise amplifier, LNA, a predefined calibration period prior to reception of an expected transmission.

4. The access terminal of claim 1, wherein the processing circuit (202) is further adapted to: power up the low noise amplifier, LNA; and compensate for effects resulting when the low noise amplifier, LNA, is powered up.

5. A method operational for a wireless communications access terminal, comprising:
monitoring (602) for received wireless communications from a base station; and **characterised by**:
analysing received wireless communication signals;
determining that a preamble is not received during a slot when operating in a connected mode in which a physical traffic channel is actively employed between the wireless communications access terminal and the base station, wherein said preamble indicates that data is expected to be present in future signals for a period of time; and
setting (606) a low noise amplifier, LNA, of a receiver circuit to a passive state for at least a portion of the slot in response to the determination.

6. The method of claim 5, further comprising: setting one or more other components of the receiver circuit to a passive state for at least a portion of the slot in response to the determination, wherein the one or more other components include one or more components selected from a group of components comprising at least one filter and at least one mixer.

7. The method of claim 5, further comprising: setting the low noise amplifier, LNA, to an active state for an expected transmission.

8. The method of claim 7, wherein setting the low noise amplifier, LNA, to an active state for an expected transmission comprises: setting the low noise amplifier, LNA, to the active state a predetermined period of time before the expected transmission, wherein the predetermined period of time is sufficient to enable the low noise amplifier, LNA, to settle after switching to the active state from the passive state.

9. The method of claim 7, wherein setting the low noise amplifier, LNA, to an active state for an expected transmission comprises: employing a filter for compensating for effects resulting from switching the low noise amplifier, LNA, from the passive state to the active state.

10. A computer-readable storage medium, comprising programming for causing a processing circuit (202) of a wireless communications access terminal (200) to:
monitor for received wireless communications from a base station in a connected mode in which a physical traffic channel is actively employed between the wireless communications access terminal and the base station; determine that a preamble is not received during a slot, wherein said preamble indicates that data is expected to be present in future signals for a period of time; and
power down a low noise amplifier, LNA, of a receiver circuit of the wireless communications access terminal while in the connected mode for at least a portion of the slot in response to the determination.

11. The computer-readable storage medium of claim 10, further comprising programming for causing the processing circuit to: power down at least one other receiver circuit component for at least a portion of the slot in response to the determination, wherein the at least one other receiver circuit component includes one or more components selected from a group of receiver circuit components comprising at least one filter and at least one mixer.

12. The computer-readable storage medium of claim 11, further comprising programming for causing the processing circuit to: power up the low noise amplifier, LNA, for an expected transmission.

13. The computer-readable storage medium of claim 12, wherein causing the processing circuit to power up the low noise amplifier, LNA, for an expected transmission comprises causing the processing circuit to: power up the low noise amplifier, LNA, a predetermined period of time prior to the expected transmission.

14. The computer-readable storage medium of claim 13, wherein causing the processing circuit to power up the low noise amplifier, LNA, for an expected transmission comprises causing the processing circuit to: power up the low noise amplifier, LNA; and compensate for effects resulting when the low noise amplifier, LNA, is powered up.

## Patentansprüche

1. Ein Drahtloskommunikations-Zugriffsendgerät (200), aufweisend:
eine Kommunikationsschnittstelle (206), die eine Empfängerschaltung (210) enthält, die konfiguriert ist zum Empfangen von Drahtloskommunikationssignalen von einer Basisstation (102) eines Drahtlosnetzwerks (100),
ein Speichermedium (204), und
eine Verarbeitungsschaltung (202), die mit der Kommunikationsschnittstelle und dem Speichermedium gekoppelt ist, wobei die Verarbeitungsschaltung **dadurch gekennzeichnet ist, dass** sie ausgebildet ist zum:
Analysieren von empfangenen Drahtloskommunikationssignalen, um zu bestimmen, dass eine Präambel nicht während eines Schlitzes empfangen wird, wenn ein Betrieb in einem verbundenen Modus gegeben ist, in dem ein physikalischer Verkehrskanal aktiv zwischen dem Drahtloskommunikations-Zugriffsendgerät und der Basisstation verwendet wird, wobei die Präambel angibt, dass in zukünftigen Signalen für eine Zeitperiode Daten zu erwarten sind, und
Herunterfahren eines rauscharmen Verstärkers (304) der Empfängerschaltung für wenigstens einen Teil des Schlitzes in Antwort auf die Bestimmung.

2. Zugriffsendgerät nach Anspruch 1, wobei die Verarbeitungsschaltung (202) weiterhin ausgebildet ist zum:
Herunterfahren einer oder mehrerer anderer Komponenten der Empfängerschaltung (210) für wenigstens einen Teil des Schlitzes in Antwort auf die Bestimmung, wobei die eine oder die mehreren Komponenten der Empfängerschaltung (210) aus einer oder mehreren Empfängerschaltungskomponenten ausgewählt sind, die wenigstens ein Filter rund wenigstens einen Mischer umfassen.

3. Zugriffsendgerät nach Anspruch 1, wobei die Verarbeitungsschaltung (202) weiterhin ausgebildet ist zum:
Hochfahren des rauscharmen Verstärkers in einer vordefinierten Kalibrierungsperiode vor dem Empfang einer erwarteten Sendung.

4. Zugriffsendgerät nach Anspruch 1, wobei die Verarbeitungsschaltung (202) weiterhin ausgebildet ist zum:
Hochfahren des rauscharmen Verstärkers, und
Kompensieren von Effekten, die beim Hochfahren des rauscharmen Verstärkers verursacht werden.

5. Ein Verfahren für ein Drahtloskommunikations-Zugriffsendgerät, aufweisend:
Überwachen (602) auf empfangene Drahtloskommunikationen von einer Basisstation,
**gekennzeichnet durch**:
Analysieren von empfangenen Drahtloskommunikationssignalen,
Bestimmen, dass keine Präambel während eines Schlitzes empfangen wird, wenn ein Betrieb in einem verbundenen Modus gegeben ist, in dem ein physikalischer Verkehrskanal aktiv zwischen dem Drahtloskommunikations-Zugriffsendgerät und der Basisstation verwendet wird, wobei die Präambel angibt, dass in zukünftigen Signalen für eine Zeitperiode Daten zu erwarten sind, und
Setzen (606) eines rauscharmen Verstärkers einer Empfängerschaltung zu einem passiven Zustand für wenigstens einen Teil des Schlitzes in Antwort auf die Bestimmung.

6. Verfahren nach Anspruch 5, das weiterhin aufweist:
Setzen einer oder mehrerer anderer Komponenten der Empfängerschaltung zu einem passiven Zustand für wenigstens einen Teil des Schlitzes in Antwort auf die Bestimmung, wobei die eine oder die mehreren anderen Komponenten eine oder mehrere Komponenten aufweisen, die aus einer Gruppe von Komponenten ausgewählt sind, die wenigstens ein Filter und wenigstens einen Mischer enthält.

7. Verfahren nach Anspruch 5, das weiterhin aufweist:
Setzen des rauscharmen Verstärkers zu einem aktiven Zustand für eine erwartete Sendung.

8. Verfahren nach Anspruch 7, wobei das Setzen des rauscharmen Verstärkers zu einem aktiven Zustand für eine erwartete Sendung aufweist:
Setzen des rauscharmen Verstärkers zu dem aktiven Zustand in einer vorbestimmten Zeitperiode vor der erwarteten Sendung, wobei die vorbestimmte Zeitperiode ausreicht, um zu ermöglichen, dass sich der rauscharme Verstärker nach dem Wechseln von dem passiven Zustand zu dem aktiven Zustand einschwingt.

9. Verfahren nach Anspruch 7, wobei das Setzen des rauscharmen Verstärkers zu einem aktiven Zustand für eine erwartete Sendung aufweist:
Verwenden eines Filters für das Kompensieren von Effekten, die durch das Wechseln des rauscharmen Verstärkers von dem passiven Zustand zu dem aktiven Zustand verursacht werden.

10. Ein computerlesbares Speichermedium, das eine Programmierung aufweist, die eine Verarbeitungsschaltung (202) eines Drahtloskommunikations-Zugriffsendgeräts (200) veranlasst zum:
Überwachen auf empfangene Drahtloskommunikationen von einer Basisstation in einem verbundenen Modus, in dem ein physikalischer Verkehrskanal aktiv zwischen dem Drahtloskommunikations-Zugriffsendgerät und der Basisstation verwendet wird,
Bestimmen, dass keine Präambel während eines Schlitzes empfangen wird, wobei die Präambel angibt, dass in zukünftigen Signalen für eine Zeitperiode Daten zu erwarten sind, und
Herunterfahren eines rauscharmen Verstärkers einer Empfängerschaltung des Drahtloskommunikations-Zugriffsendgeräts in dem verbundenen Modus für wenigstens einen Teil des Schlitzes in Antwort auf die Bestimmung.

11. Computerlesbares Speichermedium nach Anspruch 10, das weiterhin eine Programmierung aufweist, die die Verarbeitungsschaltung veranlasst zum:
Herunterfahren wenigstens einer anderen Empfängerschaltungskomponente für wenigstens einen Teil des Schlitzes in Antwort auf die Bestimmung, wobei die wenigstens eine andere Empfängerschaltungskomponente eine oder mehrere Komponenten aufweist, die aus einer Gruppe von Empfängerschaltungskomponenten ausgewählt sind, die wenigstens ein Filter und wenigstens einen Mischer enthält.

12. Computerlesbares Speichermedium nach Anspruch 11, das weiterhin eine Programmierung aufweist, die die Verarbeitungsschaltung veranlasst zum:
Hochfahren des rauscharmen Verstärkers für eine erwartete Sendung.

13. Computerlesbares Speichermedium nach Anspruch 12, wobei das Veranlassen der Verarbeitungsschaltung zum Hochfahren des rauscharmen Verstärkers für eine erwartete Sendung das Veranlassen der Verarbeitungsschaltung zum Hochfahren des rauscharmen Verstärkers in einer vorbestimmten Zeitperiode vor der erwarteten Sendung aufweist.

14. Computerlesbares Speichermedium nach Anspruch 13, wobei das Veranlassen der Verarbeitungsschaltung zum Hochfahren des rauscharmen Verstärkers für eine erwartete Sendung das Veranlassen der Verarbeitungsschaltung zum Hochfahren des rauscharmen Verstärkers und zum Kompensieren von Effekten, die beim Hochfahren des rauscharmen Verstärkers verursacht werden, aufweist.

## Revendications

1. Terminal d'accès (200) pour des communications sans fil, comprenant:
une interface de communication (206) comprenant un circuit récepteur (210) configuré pour recevoir des signaux de communication sans fil à partir d'une station de base (102) d'un réseau sans fil (100) ;
un support de stockage (204) ; et
un circuit de traitement (202) couplé à l'interface de communication et au support de stockage, le circuit de traitement étant **caractérisé en ce que** il est adapté pour :
analyser les signaux de communication sans fil reçus pour déterminer qu'un préambule n'est pas reçu au cours d'un intervalle de temps lors du fonctionnement en mode connecté dans lequel un canal de trafic physique est exploité activement entre le terminal d'accès pour les communications sans fil et la station de base, dans lequel ledit préambule indique que l'on attend la présence de données dans des signaux futurs pendant une période de temps ; et
mettre hors tension un amplificateur à faible bruit, LNA (304), du circuit récepteur pendant au moins une partie de l'intervalle de temps en réponse à la détermination.

2. Terminal d'accès selon la revendication 1, dans lequel le circuit de traitement (202) est en outre adapté pour : mettre hors tension un ou plusieurs autres composants de circuit récepteur (210) pendant au moins une partie de l'intervalle de temps en réponse à ladite détermination, le ou les plusieurs composants de circuit récepteur (210) étant choisi(s) parmi un ou plusieurs composants de circuit récepteur comprenant au moins un filtre et au moins un mélangeur.

3. Terminal d'accès selon la revendication 1, dans lequel le circuit de traitement (202) est en outre adapté pour : mettre sous tension l'amplificateur à faible bruit, LNA, pendant une période d'étalonnage prédéfinie avant la réception d'une transmission attendue.

4. Terminal d'accès selon la revendication 1, dans lequel le circuit de traitement (202) est en outre adapté pour : mettre sous tension l'amplificateur à faible bruit, LNA ; et compenser les effets résultant de la mise sous tension de l'amplificateur à faible bruit, LNA.

5. Procédé opérationnel pour un terminal d'accès pour des communications sans fil, comprenant les étapes consistant à :
surveiller (602) la présence de communications sans fil reçues à partir d'une station de base ; et **caractérisé par** les étapes consistant à :
analyser les signaux de communication sans fil reçus ;
déterminer qu'un préambule n'est pas reçu au cours d'un intervalle de temps lors du fonctionnement en mode connecté dans lequel un canal de trafic physique est exploité activement entre le terminal d'accès pour les communications sans fil et la station de base, dans lequel ledit préambule indique que l'on attend la présence de données dans des signaux futurs pendant une période de temps ; et
régler (606) un amplificateur à faible bruit, LNA, d'un circuit récepteur à un état passif pendant au moins une partie de l'intervalle de temps en réponse à la détermination.

6. Procédé selon la revendication 5, comprenant en outre l'étape consistant à régler un ou plusieurs autres composants de circuit récepteur à l'état passif pendant au moins une partie de l'intervalle de temps en réponse à ladite détermination, dans lequel lesdits un ou plusieurs autres composants comprennent un ou plusieurs composants choisi(s) parmi un groupe de composants comprenant au moins un filtre et au moins un mélangeur.

7. Le procédé selon la revendication 5, comprenant en outre l'étape consistant à : régler l'amplificateur à faible bruit, LNA, à un état actif pour une transmission attendue.

8. Le procédé selon la revendication 7, dans lequel le réglage de l'amplificateur à faible bruit, LNA, à un état actif pour une transmission attendue comprend l'étape consistant à : régler l'amplificateur à faible bruit, LNA, à un état actif pendant une période de temps prédéterminée avant la transmission attendue, dans lequel la période de temps prédéterminée est suffisante pour permettre la stabilisation de l'amplificateur à faible bruit, LNA, après le basculement à l'état actif à partir de l'état passif.

9. Le procédé selon la revendication 7, dans lequel l'étape consistant à régler l'amplificateur à faible bruit, LNA, à un état actif pour une transmission attendue comprend l'étape consistant à utiliser un filtre pour compenser les effets résultants du basculement de l'amplificateur à faible bruit, LNA, de l'état passif vers l'état actif.

10. Un support de stockage lisible par ordinateur comprenant une programmation pour amener un circuit de traitement (202) d'un terminal d'accès (200) pour des communications sans fil à :
surveiller la présence de communications sans fil reçues à partir d'une station de base en mode connecté dans lequel un canal de trafic physique est exploiter activement entre le terminal d'accès pour communications sans fil et la station de base ; déterminer qu'un préambule n'est pas reçu au cours d'un intervalle de temps, dans lequel ledit préambule indique que l'on attend la présence de données dans des signaux futurs pendant une période de temps ; et
mettre hors tension un amplificateur à faible bruit, LNA, d'un circuit récepteur du terminal d'accès pour les communications sans fil pendant le fonctionnement en mode connecté pendant au moins une partie de l'intervalle de temps en réponse à la détermination.

11. Le support de stockage lisible par ordinateur selon la revendication 10, comprenant en outre une programmation pour amener le circuit de traitement à : mettre hors tension au moins un autre composant de circuit récepteur pendant au moins une partie de l'intervalle de temps en réponse à ladite détermination, dans lequel le au moins un autre composant de circuit récepteur comprend un ou plusieurs composants choisi(s) parmi un groupe de composants de circuit récepteur comprenant au moins un filtre et au moins un mélangeur.

12. Le support de stockage lisible par ordinateur selon la revendication 11, comprenant en outre une programmation pour amener le circuit de traitement à : mettre sous tension l'amplificateur à faible bruit, LNA, pour une transmission attendue.

13. Le support de stockage lisible par ordinateur selon la revendication 12, dans lequel l'étape consistant à amener le circuit de traitement à mettre sous tension l'amplificateur à faible bruit, LNA, pour une transmission attendue comprend une étape consistant à amener le circuit de traitement à : mettre sous tension l'amplificateur à faible bruit, LNA, pendant une période de temps prédéterminée avant la transmission attendue.

14. Le support de stockage lisible par ordinateur selon la revendication 13, dans lequel l'étape consistant à amener le circuit de traitement à mettre sous tension l'amplificateur à faible bruit, LNA, pour une transmission attendue comprend les étapes consistant à amener le circuit de traitement : à mettre sous tension l'amplificateur à faible bruit, LNA ; et à compenser les effets résultants lors de la mise sous tension de l'amplificateur à faible bruit, LNA.
